# EUROPEAN PATENT SPECIFICATION

(11) **EP 0 873 685 B1**
(45) Date of publication and mention of the grant of the patent: **07.08.2002**
(21) Application number: 98107044.4
(22) Date of filing: 17.04.1998
(51) Int. Cl.: A01K 87/00, B29C 53/38

(54) **Tubular body**
Rohrförmiger Körper
Corps tubulaire

(30) Priority: 18.04.1997 JP 10186197; 30.01.1998 JP 1894298
(43) Date of publication of application: 28.10.1998
(73) Proprietor: DAIWA SEIKO INC., Higashikurume-shi, Tokyo (JP)
(72) Inventor: Kameda, Kenichi, Higashikurume-shi, Tokyo (JP); Okamoto, Toshihisa, Higashikurume-shi, Tokyo (JP); Koganei, Shoichi, Higashikurume-shi, Tokyo (JP); Watanabe, Masanori, Higashikurume-shi, Tokyo (JP); Naitoh, Hideyuki, Higashikurume-shi, Tokyo (JP); Fukuoka, Shinji, Kikuchi-gin, Kumamoto (JP)
(74) Representative: Grünecker, Kinkeldey, Stockmair & Schwanhäusser Anwaltssozietät

(56) References cited:
- PATENT ABSTRACTS OF JAPAN vol. 012, no. 257 (M-719), 20 July 1988 & JP 63 039327 A (RYOBI LTD), 19 February 1988,
- PATENT ABSTRACTS OF JAPAN vol. 010, no. 066 (M-461), 15 March 1986 & JP 60 212334 A (DAIWA SEIKOU KK), 24 October 1985,

## Description

### BACKGROUND OF THE INVENTION

### 1. Field of the Invention

The present invention relates to a tubular body for use as a fishing rod, a golf club shaft and the like, and more particularly, to various kinds of tubular bodies which are made by winding prepreg sheets prepared by impregnating reinforced fibers with synthetic resins thereon.

### 2. Description of the Related Art

A tubular body of the sort mentioned above is normally prepared through the steps of winding a prepreg sheet on a mandrel in such a way as to overlap both ends of the prepreg sheet, winding a cellophane tape thereon for stabilizing purposes, thermosetting synthetic resins in a heating oven, then cooling the resulting product, removing the mandrel, peeling off the cellophane tape, polishing the product and coating it with paint. In this case, different configurations are made for the prepreg sheet wound on the mandrel with regard to kinds of reinforcing fibers, arrange directions, thickness of sheets, the quantity of resin impregnation, winding modes and so on, depending on the use of the tubular body, the property required and so on. For example, as disclosed in Japanese Patent Laid-Open No. 225669/1994 and Japanese Patent Publication No. 432/1996, it is known that a high-strength prepreg tubular body is made obtainable from a so-called three-layer structure by winding a thin-wall prepreg sheet whose reinforcing fibers are extended in the circumferential direction to form the innermost layer, winding a thick-wall prepreg sheet whose reinforcing fibers are extended in the axial direction to form an intermediate layer, and winding a thin-wall prepreg sheet whose reinforcing fibers are extended in the circumferential direction to form the outermost layer.

When one sheet of prepreg is wound a plurality of times to form the aforesaid thick-wall intermediate layer, the fiber orientations at the start and end of the winding may vary (tilt) or cause wrinkles and the like to be produced, thus resulting in thickness deviation. Therefore, there generally follows the step of winding a plurality of prepreg sheets separately ply by ply as disclosed in Japanese Patent Laid-Open No. 74739/1980, for example.

As stated above, however, both end portions of the prepreg sheet become necessarily an overlapping margin (one end portion of the surface and the other end portion of the undersurface overlap) when the one-ply prepreg sheet is joined onto the mandrel; consequently, the wall thickness at the joint varies, that is, there is produced a thick-wall portion. The problem is that not only the directivity but also strength of such a tubular body tend to vary or the weight is caused to increase because the thick-wall portion is partially formed in the circumferential direction.

On the other hand, it is known that a prepreg to be wound on the mandrel is cut so that its end portions are joined together at the time of winding, that is, the overlapping margin becomes zero or otherwise the prepreg is wound so that its winding position is shifted ply by ply to shift the overlapping margin in the circumferential direction in order to avoid localizing the protrusions concentrically.

However, it is hardly easy to cut the prepreg in such a way as to join together its end portions at the time of winding in view of winding errors, mass-producibility and the like, which results in failing to join together the end portions and causing strength and rigidity variations. Moreover, although the decentralization of overlapping margins in the circumferential direction is relatively effective when the resin impregnation amount of the prepreg before being molded is comparatively high (30 wt% or higher), such decentralization is not preferred when a prepreg having a low resin impregnation amount (the resin impregnation amount after the prepreg is molded becomes 23 wt% or lower) is employed for reducing not only the weight but also wall thickness of the whole fishing rod. In other words, although resin tends to flow into the overlapping margin at the thermosetting treatment when the resin impregnation amount of the prepreg is high, thus uniformalizing the wall thickness in that margin, less resin flows into the overlapping margin when the resin impregnation amount is low and there develops a difference in the wall thickness of the prepreg in the overlapping margin.

Therefore, a typical conventional fishing rod has rod tubes each of which has a protruded portion partially and axially extending in the circumferential direction and even when such a protruded portion is slightly eased, the fishing rod as a whole is constituted of rod tubes having a high resin impregnation amount.

### SUMMARY OF THE INVENTION

An object of the present invention is to provide a tubular body whose laminated prepreg sheet has improved roundness by decreasing a difference in wall thickness in the circumferential direction.

In order to solve the foregoing problems, a tubular body according to the present invention is characterized in that the width of a one-ply prepreg sheet out of the wound-layers is set so that both end portions of the prepreg sheet are not overlapped to form a spread portion. In other words, according to the present invention, attention is riveted to the fact that the resins and reinforced fibers of the prepreg sheet are caused to flow at a heating step and the formation of such a spread portion allows a prepreg sheet in another layer adjacent to the layer formed with the prepreg sheet and the resins and reinforced fibers of the prepreg sheet itself to flow into the spread portion and to fill up the space therein. Consequently, it is possible to form a layer free from wall thickness variations in the circumferential direction.

With the arrangement above, when the space formed from the spread portion is great, the overlapping portion of the adjoining layer formed from the prepreg sheet may be positioned in the spread portion. Since the quantity of resins and that of fibers are set proportionally large in the overlapping portion, the insufficiency of the resins and fibers in the spread portion can be supplemented by positioning the overlapping portion in the spread portion having a greater space and making them flow into the spread portion. Thus, wall thickness variations because of the thick wall can be eliminated.

Further, the present invention is characterized in that a thin wall tilted portion is formed in both end portions of a one-ply prepreg sheet and that the tilted portions are overlapped. When the thin wall portions are overlapped like this, the overlapping area becomes thin-walled. However, since resins and fibers are caused to flow from the periphery at a heating step likewise, the thin wall area is filled up. Consequently, it is possible to form a layer free from wall thickness variations in the circumferential direction.

Further, a fishing rod according to the present invention has a rod tube prepared by winding a circumferential prepreg as an inner layer, a prepreg as an intermediate layer mainly formed from axially oriented fibers, and a circumferential prepreg as an outer layer, and is characterized by: the circumferential prepreg whose width is so great as to overlap its end portions; and the axial prepreg having an overlapping margin, of its end portions in the range of up to 3 mm and at 6% or lower or otherwise formed so that its end portions are overlapped in a thin wall portion which is formed in its end portion area, and the circumferential prepreg and the axial prepreg are integrally wound.

Thus, the end portions of the axial prepreg are joined together (although a space may slightly be left) or overlapped in the thin-wall portion, and those of the circumferential prepreg are partially overlapped. The wound-end-portions are prevented from becoming thick-walled as much as possible by integrally winding these prepregs.

A fishing rod according to the present invention has a rod tube prepared by winding a circumferential prepreg as an inner layer, a prepreg as an intermediate layer mainly formed from axially oriented fibers, and a circumferential prepreg as an outer layer, characterized in that: the intermediate layer formed from the axial prepreg is formed with a plurality of prepregs; and that a resin impregnation on the inner layer side is increased.

Thus, out of the axial prepregs forming the intermediate layer, the outer layer side is allowed to easily be ingrowing because of a resin flow at the time of thermosetting treatment by increasing the resin impregnation of the inner layer side, whereby a protruded portion is prevented from being produced in an overlapping margin as much as possible.

### BRIEF DESCRIPTION OF THE DRAWINGS

Similar reference characters denote corresponding features consistently throughout the attached drawings. The preferred embodiments of this invention will be described in detail, with reference to the following figures, wherein:
Fig. 1A is a diagram showing a configuration of a tubular body according to a first embodiment of the present invention;
Fig. 1B is a sectional view taken on line I - I of Fig. 1A;
Fig. 2 is a diagram showing an arrangement of prepreg sheets with respect to a mandrel in order to obtain the winding state shown in Fig. 1B;
Fig. 3A is a diagram showing the sectional structure of a tubular body according to a second embodiment of the present invention;
Fig. 3B is a diagram showing an arrangement of prepreg sheets with respect of a mandrel in order to obtain the winding state shown in Fig. 3A;
Fig. 4 is a partial sectional view of a tubular body according to a third embodiment of the present invention;
Fig. 5 is a partial sectional view of a tubular body showing a modified embodiment of the third embodiment;
Fig. 6A and 6B are diagrams explaining a fourth embodiment of the present invention, in which Fig 6A is a diagram showing end portions of a prepreg sheet before being processed, and Fig. 6B is a diagram showing the end portions after being processed;
Fig. 7 is a partial sectional view of the tubular body showing a state in which the prepreg sheet shown in Fig. 6B has actually been wound;
Fig. 8A is a partial vertical sectional view of a rod tube forming a fishing rod of the present invention;
Fig. 8B is a sectional view taken on line II - II of Fig. 8A;
Fig. 9 is a diagram showing a laminated structure of the prepreg used to form a rod tube; and
Fig. 10 is a diagram showing an example of the formation of a prepreg for use in obtaining the laminated structure shown in Fig. 9.

### DETAILED DESCRIPTION OF THE PREFERRED EMBODIMENTS

Referring to the attached drawings, there is given a description of embodiments of the present invention.

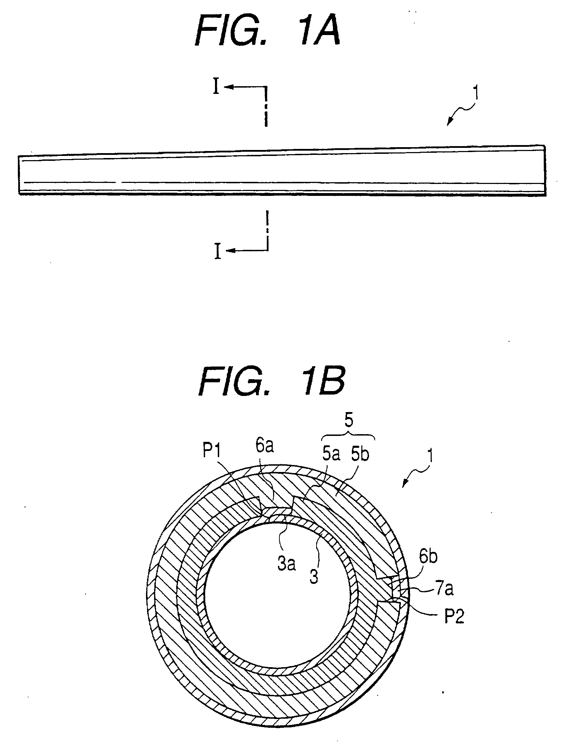

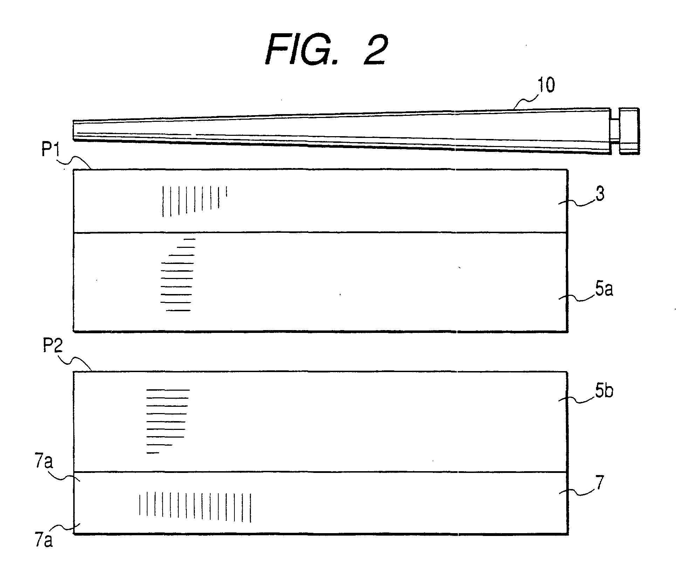

Fig. 1A, 1B and Fig. 2 are diagrams showing a first embodiment of the present invention, wherein Fig. 1A is a diagram showing a tubular body; Fig. 1B, a sectional view taken on line I - I of Fig. 1A; and Fig. 2, a diagram showing an-example of a prepreg sheet for obtaining the winding state as shown in Fig. 1B with respect to a mandrel.

A tubular body 1 of Fig. 1A is made of so-called FRP, that is, completed by winding a prepreg sheet prepared by impregnating reinforced fibers with synthetic resins and Fig. 1B shows its sectional structure. The tubular body according to this embodiment of the present invention basically includes the innermost layer 3 formed with a prepreg sheet whose reinforcing fibers are extended in the circumferential direction, an intermediate layer 5 formed with a prepreg sheet whose reinforced fibers are extended in the axial direction, and the outermost layer 7 formed with a prepreg sheet whose reinforced fibers are extended in the circumferential direction. The innermost and outermost layers are respectively formed with the one-ply prepreg sheet, whereas the intermediate layer is formed with the prepreg sheets 5a, 5b wound ply by ply.

The width of the one-ply prepreg sheet 5a (5b) is such that the prepreg sheet is cut so that their end portions are not overlapped when it is actually wound up. Thus, there is formed a spread portion 6a (6b) with both end portions free from overlapping. The overlapping portion of the adjoining prepreg sheet is positioned in the spread portion 6a (6b). More specifically, according to this embodiment of the present invention, the overlapping portion 3a of the innermost layer 3 is positioned in the spread portion 6a formed by the prepreg sheet 5a on the inner layer side, whereas the overlapping portion 7a of the prepreg sheet in the outermost layer 7 is positioned in the spread portion 6b formed by the prepreg sheet 5b on the outer layer side.

Fig. 2 shows an example of the arrangement of the respective prepreg sheets for the winding state like this. A description will subsequently be given of the aforesaid arrangement with reference to Fig. 1B and Fig. 2 in comparison. The prepreg sheet as the innermost layer (shown by reference number 3) and the prepreg sheet 5a are combined together without any overlapping margin. Further, the prepreg sheet (shown by reference number 7) as the outermost layer and the prepreg sheet 5b are combined together without any overlapping margin likewise. Each one-ply prepreg sheet is joined onto a mandrel 10. The width of the prepreg sheets 3, 7 is set so that the end portions of each are overlapped, whereas the width each of the prepreg sheets 5a, 5b is set so that the aforesaid spread portions 6a, 6b are formed.

With respect to the prepreg sheets thus arranged, the end edge P1 of the prepreg sheet 3 is attached onto the outer surface of the mandrel 10 first and then wound clockwise. When the prepreg sheet is wound by one ply, the end portions of the prepreg sheet 3 are overlapped and the overlapping portion 3a is formed. When the prepreg sheet 5a combined with the innermost layer 3 is wound by one ply, the spread portion 6a is formed because of the preset size, and the overlapping portion 3a is positioned in the spread portion 6a.

Subsequently, the end edge P2 of the prepreg sheet 5b is also attached onto the outer surface of the prepreg sheet 5a already wound and wound clockwise. Although the end edge P2 may be attached onto any position then, it is preferably position opposite to the spread portion 6a (not shown) in consideration of balance. When the prepreg sheet 5b is wound by one ply, the spread portion 6b is formed because of the preset size and when the prepreg sheet 7 thus combined is continuously wound by one ply, the overlapping portion 7a of the prepreg sheet 7 is positioned in the spread portion 6b.

When the mandrel 10 with the prepreg sheets thus wound thereon is heated according to the usual method, resins and fibers is caused to flow into the spread portions 6a, 6b through their peripheral areas, particularly through the overlapping portions 3a, 7a between the layer and the adjoining one, so that the respective spaces are filled up. Ultimately, the wound-layers formed with the prepreg sheets 3, 7 and 5a, 5b are set free from a difference in wall thickness in the circumferential direction. This is due to the fact that the resins and fibers in the overlapping portions which tend to form the wall-thick portions flow into the spread portions 6a, 6b located correspondingly and are uniformly flattened. Consequently, variations in the directivity and strength of the tubular body 1 ultimately formed are prevented from occurring since a difference in wall thickness is eliminated in each layer formed with the prepreg sheet. Moreover, the formation of the spread portions beforehand contributes to proportionally reducing the weight of the tubular body.

There may be made, although not particularly limited to, the following arrangement for each of the prepreg sheets, for example, according to the aforesaid embodiment of the present invention.

The wall thickness of the prepreg sheets 5a, 5b constituting the intermediate layer is preferably set in the range of 0.03 mm to 0.2 mm (preferably 0.08 mm). The wall thickness each of the prepreg sheets 3, 7 used to form the respective innermost and outermost layers is preferably set in the range of 0.01 mm to 0.07 mm (preferably 0.05 mm). The resin impregnation amount of the prepreg sheets 5a, 5b constituting the intermediate layer is preferably set in the range of 10 wt% - 30 wt% (may be 50 wt% or lower) and the resin impregnation amount of the prepreg sheets 3, 7 used to form the respective innermost and outermost layers is preferably set in the range of 23 wt% to 60 wt%. Actually, it is preferred to set the resin impregnation amount of the prepreg sheets 3, 7 greater in order to make the resin easily flow into the spread portions 6a, 6b of the prepreg sheets 5a, 5b.

In respect to the reinforcing fibers of the respective prepreg sheets, use can be made of organic fibers or inorganic fibers containing carbon, glass, boron, aramid, alumina or the like. When carbon fibers are actually employed, although fibers having elastic moduli ranging from 24 t/mm³ - 60 t/mm³ are normally used, they may be greater or smaller. As the resin for use, thermosetting synthetic resins of epoxy, polyester or the like are employed.

With the arrangement above, although one innermost and one outermost layer, and two intermediate layers have been formed, any other layer of prepreg may be added. Moreover, another layer of prepreg may also be added to a part (e.g., on the leading or tail end side) in the longitudinal direction.

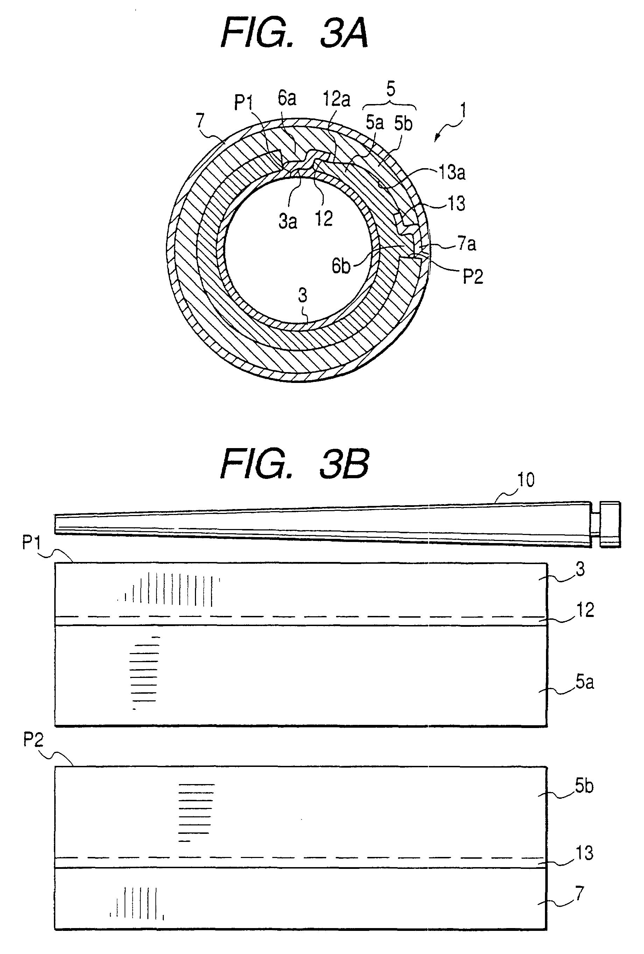

Referring to Fig. 3A and 3B, there is given a description of a second embodiment of the present invention. When a tubular body basically including the component parts as shown in Fig. 1 is obtained, the arrangement of prepreg sheets is not limited to what is shown in Fig. 2 but may be what is shown in Fig. 3B. An example of the arrangement shown in Fig. 3B is such that the prepreg sheet 3 and the prepreg sheet 5 used to form the innermost layer are coupled together via an overlapping portion 12 and that the surface of the end portion of the prepreg sheet 5a is bonded onto the undersurface of the end portion of the prepreg sheet 3. Similarly, the prepreg sheet 5b and the prepreg sheet 7 as the outermost layer are coupled together via an overlapping portion 13, the surface of the end portion of the prepreg sheet 7 is bonded onto the undersurface of the end portion of the prepreg sheet 5b.

With respect to the prepreg sheets thus arranged, the end edge P1 of the prepreg sheet 3 is attached onto the outer surface of the mandrel 10 first as shown in Fig. 3A and wound clockwise. When the prepreg sheet 3 is wound by one ply, the end portions of the prepreg sheet 3 are overlapped to form the overlapping portion 3a and when the prepreg sheet 5a coupled thereto is continuously wound by one ply, the spread portion 6a is formed because of the preset size, whereby the overlapping portion 3a is formed in the spread portion 6a.

Subsequently, the end edge P2 of the prepreg sheet 5b is also attached onto the outer surface of the prepreg sheet 5a already wound and wound clockwise. When the prepreg sheet 5b is wound by one ply, the spread portion 6b is formed because of the preset size and when the prepreg sheet 7 thus combined is continuously wound by one ply, the overlapping portion 7a of the prepreg sheet 7 is positioned in the spread portion 6b.

An effect similar to what is described in the aforesaid embodiment of the present is made obtainable actually by following the heating step in this example of the arrangement of the prepreg sheets like this. According to this embodiment of the present invention, the prepreg sheets 3, 5a and the prepreg sheets 5b, 7 are overlapped and coupled together respectively via the overlapping portions 12, 13, and excessive resins and fibers are allowed to flow into the spread portions 6a, 6b from the overlapping portions. In this case, if the width of the spread portions 6a, 6b is small, the resins and fibers become rather excessive in these portions and may ultimately turn into a thick-wall form. Consequently, as shown in Fig. 3A, thin-wall portions 12a, 13a are preferably provided for the respective prepreg sheets 5a, 5b in the overlapping portions 12, 13. The thin-wall portion 12a, 13a may be formed by pressing its end-portion areas beforehand with iron or the like.

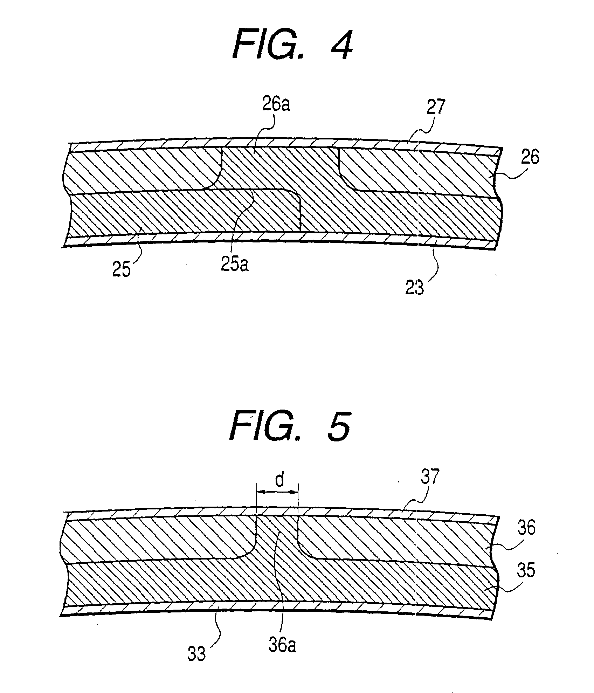

Referring to Fig. 4, there is given a description of a third embodiment of the present invention. According to the aforesaid embodiments of the present invention, although the innermost and outermost layers have been utilized so that the overlapping portions of prepreg sheets in the adjoining layers are positioned in the spread portions, it is also possible to obtain such an arrangement from between prepreg sheets constituting an intermediate layer. More specifically, as shown in Fig. 4, a prepreg sheet 25 as the first intermediate layer positioned on the innermost layer 23 may be wound by one ply in order to position a spread portion 26a by means of a prepreg sheet 26 as an intermediate layer thereabove in the overlapping portion 25a of the first intermediate layer. With this arrangement, resins and fibers are allowed to flow into the spread portion 26a from the overlapping portion 25a and its peripheral area at the heating step, and the space formed from the spread portion 26a is filled up as shown in Fig. 4, whereby the intermediate layer ultimately formed is set free from wall thickness variations.

As described above, although the width of the prepreg sheet wound by one ply is set so that the spread portion is formed, if the space formed from the spread portion is set as small as in the range of about 0.1 mm to 1.0 mm, the spread portion may be satisfactorily filled up with resins and fibers flowing from the peripheral area without positioning the overlapping portion formed from the adjoining layer in the spread portion. In other words, like the arrangement shown in Fig. 5, even when the spread portion 36a of a prepreg sheet 36 as the second intermediate layer positioned thereon is provided in a position where the overlapping portion of a prepreg sheet 35 as the first intermediate layer positioned on the innermost layer 33 is not formed, on condition that the space d formed from the spread portion is in the range of about 0.1 mm - 1.0 mm, resins and fibers are allowed to flow into the spread portion 36a from the spread portion 36a and its peripheral area at the heating step, and the space formed from the spread portion 36a is filled up as shown in Fig. 5, whereby the intermediate layer ultimately formed is set free from wall thickness variations.

When the space formed from the spread portion is set to 2 mm or greater, a shortage of resins and fibers may occur at the actual heating step, thus ultimately causing wall thickness variations. When the space formed from the spread portion is wide like this, it is also acceptable to make an additional arrangement by positioning the overlapping portion in the spread portion or winding an auxiliary material such as a thin prepreg sheet, a plastic sheet or the like on the space during the step of winding the prepreg sheet simultaneously with or separately from the positioning of the aforesaid overlapping portion as described above.

As in the embodiments of the present invention showing in Fig. 4 and Fig. 5, since it can be arranged so that the wall thickness variations are eliminated between the prepreg sheets constituting the intermediate layer, the number of intermediate layers may be changed in various manners by properly combining these arrangements with those shown in Figs. 1 - 3B.

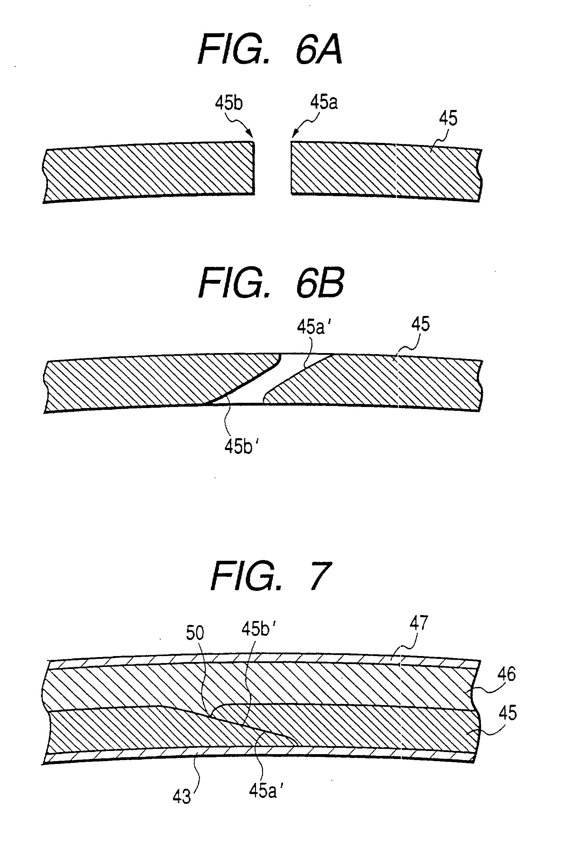

Referring to Figs. 6A, 6B and Fig. 7, there is given a description of a fourth embodiment of the present invention. Although the aforesaid embodiments of the present invention are characterized by forming the spread portion in the prepreg sheet wound by one ply, the formation of a thin-wall overlapping portion of end portions other than that of such a spread portion may also serve the purpose. More specifically, since even the formation of the thin-wall overlapping portion allows resins and fibers to flow in from the peripheral area at the actual heating step, the thin wall area is filled up, which results in obtaining a layer free from wall thickness variations in the circumferential direction. With this arrangement like those described above, the overlapping portion of the prepreg sheet in the adjoining layer may be or may not be positioned in the thin-wall overlapping portion.

Figs 6A and 6B show an example of making thinner an overlapping portion due to both end portions 45a, 45b of a prepreg sheet 45 as.the intermediate layer. Tilted portions 45a', 45b' facing each other are formed in the respective end portions 45a, 45b of the prepreg sheet 45 as shown in Fig. 6A by pressing the end portion areas with an iron, for example, before the winding step is taken as shown in Fig. 6B.

As shown in Fig. 7, the prepreg sheet 45 formed with the tilted portions 45a', 45b' is wound on the innermost layer 43, and a prepreg sheet 46 as a second intermediate layer as well as a prepreg sheet 47 as the outermost layer are wound thereon in order. The overlapping portions due to the tilted portions 45a', 45b' are thin-walled and these portions are overlapped so as to form a thin wall portion 50. When a tubular body in the winding state is heated, because resins and fibers are caused to flow into the thin wall portion 50 from the peripheral area, the thin wall area like this is filled up and consequently there is formed a layer free from wall thickness variations in the circumferential direction is formed.

As set forth above with reference to the embodiments of the present invention, the excessive resins and fibers in the overlapped portion formed with both end portions of the prepreg sheet flow into the spread portion or the thin-wall portion formed in the adjoining portion and fill up the space, so that the laminated structure ultimately formed is set free from wall thickness variations. When the space formed from the spread portion or the thin wall portion is small, the resins and fibers flow from its peripheral area and fill up the space, so that the laminated structure ultimately formed is set free from wall thickness variations. With the formation of the spread portion and the thin wall portion, the whole tubular body can be made lightweight.

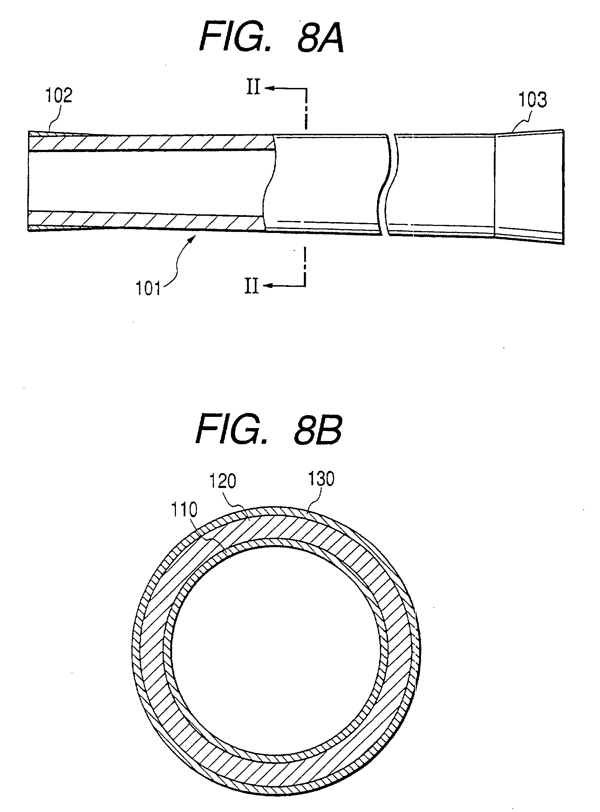

Referring to Figs. 8A and 8B, there is given a description of a fifth embodiment of the present invention.

Fig. 8A is a partial sectional view of a rod tube 101 forming a fishing rod; and Fig. 8B, a sectional view taken on line II - II of Fig. 8A. The rod tube 101 includes an inner and an outer layer 110, 130 formed from winding circumferential prepregs prepared by extending reinforced fibers in the circumferential direction, and an intermediate layer 120 formed from an axial prepreg prepared by extending reinforced fibers in the axial direction.

A reinforcing prepreg 102 for preventing the leading end portion of each rod tube from cracking is wound on the outer layer, and a ferrule forming prepreg 103 is wound on the base end portion to form a rod-to-rod ferrule. In this case, it is preferred to extend fiber orientations of the prepreg 102 in the circumferential direction and to set a resin impregnation amount at 28 wt% or higher. It is also preferred to extend fiber orientations of the prepreg 103 in the axial direction or to use the prepreg 103 in the state of woven fabric and to set a resin impregnation amount at 25 wt% or higher.

The circumferential prepreg for use in forming the inner and outer layers 110, 130 has a wall thickness in the range of about 0.01 to 0.06 mm and a single one-ply layer (or a plurality of prepregs may be superposed). The axial prepreg for use in forming the intermediate layer 120 has a wall thickness in the range of about 0.02 - 0.2 mm and a single layer or a plurality of prepregs are wound by one ply. An extra-thin prepreg sheet, for example, may be provided in the axial prepreg forming the intermediate layer in order to prevent fibers unidirectionally oriented from disintegrating or spreading, so that it is only needed to form the intermediate layer with axially oriented fibers.

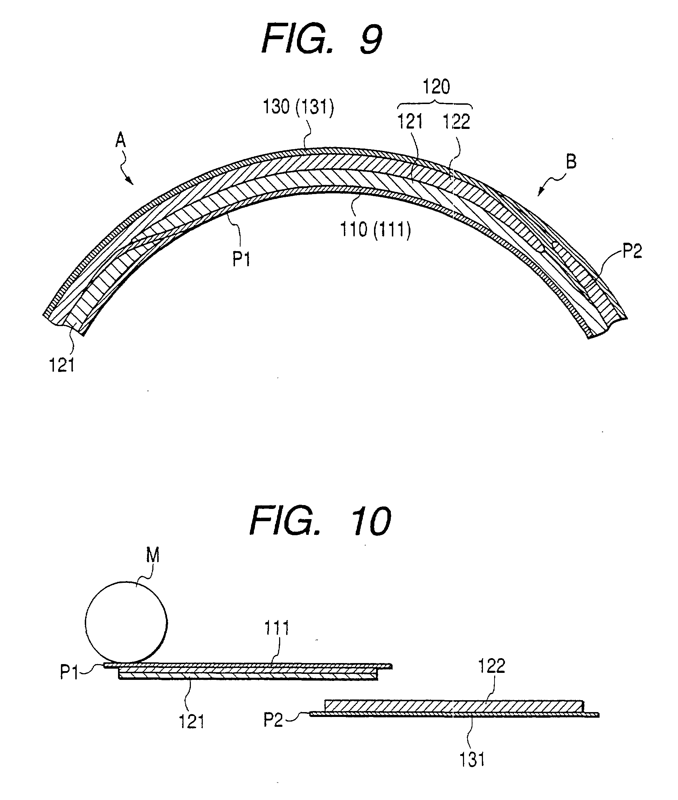

As shown in Fig. 9 and Fig. 10, the width of a circumferential prepreg 111 for use in forming the inner layer 110 is set so great as to wind the prepreg by one ply on a mandrel M and actually as to overlap the end portions of the one-ply prepreg; more specifically, the circumferential prepreg is one layer having an overlapping margin in the range of 1 to 5 (preferably 3) mm. Similarly, the width of a circumferential prepreg 131 for use in forming the outer layer 130 is set so great as to wind the prepreg by one ply on the mandrel M and actually as to overlap the end portions of the one-ply prepreg wound on the intermediate layer; more specifically, the circumferential prepreg is one layer having an overlapping margin in the range of 1 to 5 (preferably 3) mm. The reason for setting the overlapping margins of the circumferential prepregs 111, 131 in that range is that when the margin is shorter than 1 mm, that small margin tends to make the prepreg tear easily and that when the margin is greater than 5 mm, that long margin tends to produce a thick wall area. In this case, the overlapping portions (both end portions) of the respective prepregs 111, 131 are preferably gradually thin-walled toward the front ends thereof.

The axial prepregs for use in forming the intermediate layer 120 are such that as shown in Fig. 10, one of them is disposed on the outer layer side of the circumferential prepreg 111 and the other on the inner layer side of the circumferential prepreg 131. The circumferential prepregs 111, 131 are integrally wound layer to layer. In this case, a circumferential prepreg 121 which is disposed on the outer layer side of the circumferential prepreg 111 is in a double-layer superposed form, and an axial prepreg 122 which is disposed on the inner layer side of the circumferential prepreg 131 is in a single-layer form. Incidentally, these prepregs 121, 122 may be wound separately.

The width of each of the axial prepregs 121, 122 is set so great as to have the prepreg wound by one ply on the mandrel M and also set shorter in width than that of the aforesaid circumferential prepregs 111, 131. Actually, although the one-ply prepreg is most preferably joined together by an overlapping of both end portions with a width up to 3.0 mm or less and 6% or lower of the circumference. If the space is 1 mm or greater, cracking is produced because of the production of a thin-wall portion and if the overlapping margin amounts to 3.0 mm or more and exceeds 6% of the circumference, wall thickness becomes conspicuous.

As shown in Fig. 9 otherwise, each of the end portions of the prepregs 121, 131 may be thin-walled toward the front end in order to overlap both end portions. When the end portions like this are overlapped each other, the overlapping range is set to 5 mm or less and preferably 3 mm or less in view of workability, quality stability and the like.

With the arrangement above, there are produced two winding end portion overlapping areas (overlapping areas) of the prepregs when each of the prepregs is wound on the mandrel M. However, these areas (shown by symbols A and B) are provided in different positions in the circumferential direction. As shown in Fig. 9, for example, both areas are shifted by 90°. In order to shift the overlapping areas like this, the winding start position P2 of the prepreg on the outer layer side is shifted by 90° with respect to the winding start position P1 of the prepreg on the inner layer side.

In the winding end portion overlapping areas A, B with the arrangement above, the end portions are overlapped when the thin-wall circumferential prepregs 111, 131 are wound by one ply, and the thin-walled portions of the thick-wall axial prepregs 121, 131 are overlapped in the end portion areas.

With the arrangement like that, the wall thickness of the overlapped portion in the winding end portion can be reduced, so that the roundness of the rod tube molded after the thermosetting heat treatment is increased. In order to reduce the weight of the fishing rod and the like in particular, even although the resin impregnation amount of the axial prepreg is lowered (the prepreg whose resin impregnation amount after molding is set at 23 wt% or lower), the appearance of the protruded portions in the areas A, B is suppressed and weight reduction becomes achievable, whereby a fishing rod excellent in strength and rigidity balance is obtainable.

Further, a description will subsequently be given of a sixth embodiment of the present invention.

As described above, in the layers constituting a rod tube, an intermediate layer may have a plurality of laminated prepregs (may mainly include axial prepregs) prepared by extending reinforced fibers in the axial direction as shown in the drawings. With this arrangement, the roundness of the rod tube is made improvable by increasing the resin impregnation amount of the axial prepreg on the inner layer side so as to suppress the generation of a protruded portion in an overlapping margin as much as possible. With this arrangement, it is needless to say preferred that the overlapping margin of the end portions of the axial prepreg is set in the range of up to 3.0 mm and 6% or lower of the circumference, and the thin-wall end portions of the axial prepreg are overlapped.

This is because if the resin impregnation amount of the prepreg disposed on the inner layer side is high, the prepreg on the outer layer side is ingrown inside because of the resin flow at the time of thermosetting treatment and tends to make the wall thickness homogeneous. If the resin impregnation amount of the axial prepreg used on the inner layer side is actually set higher by about 5 to 15% (20%) than that of the axial prepreg used on the outer layer side, it is possible to improve the roundness after molding.

The arrangement above is also applicable to the preceding embodiment of the present invention. In the embodiment shown in Fig. 9 and Fig. 10, the resin impregnation amount of the axial prepreg 121 on the inner layer side may be set higher than that of the axial prepreg 122 on the outer layer side. When the resin impregnation amount of the prepreg 121 on the inner layer side is increased with the arrangement like this, moreover, it is preferred to set the thickness of the prepreg 121 in the range of 20% to 70%; thus, weight reduction as well as roundness improvement is made achievable by setting the thickness thereof in the above range.

As set forth above, the fifth and sixth embodiments of the present invention is characterized by the overlapping portion of the prepreg used to form the rod tubes constituting a fishing rod. The wall thickness of the prepregs, the number of laminated prepregs, the resin impregnation amount of each prepreg, the elastic moduli of reinforced fibers and the like may be modified in various manners with the required properties of fishing rods for actual use. In the above-described embodiments of the present invention, for example, a fishing rod excellent in not only strength and rigidity balance but also operability together with improvement in specific strength and specific rigidity by setting the resin impregnation amount of the whole prepreg constituting the rod tube (or the whole layer of the rod tube body) in the range of 10 to 25 wt%.

The present invention is not limited to the embodiments thereof as set forth above but may be modified in various manners. For example, although the tubular body embodying the present invention has been described as what basically includes the innermost and outermost layers formed with the prepreg sheets whose reinforcing fibers are extended in the circumferential direction, the intermediate layer formed with prepreg sheet whose reinforced fibers are extended in the axial direction, the present invention is limited to the structure like this. Moreover, the composition of the prepreg sheet itself for use in forming the wound-layer, the number of turns and the like may be varied.

According to the present invention, a reduced-weight tubular body is obtainable since the wound-layers formed with prepreg sheets constituting the tubular body have uniform thickness, whereby variations in the directivity and strength of the tubular body are suppressed.

Further, as set forth above, a fishing rod is obtainable by eliminating the protrusion partially extending in the circumferential direction of the rod tube due to the overlapping portion of the prepreg in the circumferential direction of the rod tube in order to improve the roundness of the rod tube without strength and rigidity variations.

## Claims

1. A tubular body comprising wound-layers which are formed with prepreg sheets prepared by impregnating reinforced fibers with synthetic resins, **characterized in that** a thin wall tilted portion (12a, 13a, 45a', 45b') is formed in both end portions of one prepreg sheet (45) wound by one-ply for constituting one of said wound-layers, wherein said tilted portions (12a, 13a, 45a', 45b') overlap each other.

2. A tubular body according to claim 1, **characterized in that** said prepreg sheet (45) wound by one-ply forms a portion for assimilating excessive amount of resins and fibers at an overlapping portion (3a, 7a, 12, 13, 25a, 50) of said tilted portion (12a, 13a, 45a', 45b') of said prepreg sheet.

3. A tubular body according to claim 2, **characterized in that** said portion for assimilating excessive amount of resins and fibers is a thin wall portion (50).

4. A tubular body according to at least one of the preceding claims 1 to 3, **characterized in that** said prepreg sheet (45) formed with said tilted portions (12a, 13a, 45a', 45b') is wound on an innermost layer (43), and a prepreg sheet (46) as a second intermediate layer as well as a prepreg sheet (47) as an outermost layer are wound thereon in order.

5. A tubular body comprising wound-layers which are formed with prepreg sheets prepared by impregnating reinforced fibers with synthetic resins, **characterized in that** said one prepreg sheet as an intermediate layer (5, 25, 26, 35, 36, 45, 46, 120) wound by one-ply for constituting one of said wound-layers is overlapped at its one end portion by another adjacent prepreg sheet as an inner layer (3, 23, 33, 43, 110) wound by one-ply for constituting another wound-layer, wherein said inner layer (3, 23, 33, 43, 110) comprises on overlapping portion (3a, 7a, 12, 13, 25a, 50) of both end portions thereof and said overlapping portion (3a, 7a, 12, 13, 25a, 50) is positioned in a spread portion (6a, 6b, 26a, 36a) defined by both end portions of said intermediate layer (5, 25, 26, 35, 36, 45, 46, 120).

6. A tubular body according to claim 5, **characterized in that** a width of said spread portion (6a, 6b, 26a, 36a) is formed in a range of 0.1 mm - 1.0 mm.

7. A tubular body according to claim 5 or 6, **characterized in that** said overlapping portion (3a, 7a, 12, 13, 25a, 50) and said spread portion (6a, 6b, 26a, 36a) are filled up with excessive amount of resins and fibers from adjacent prepreg sheets at thermosetting treatment.

8. A tubular body according to at least one of the preceding claims 1 to 7, **characterized in that** an outer layer (7, 27, 37, 47, 130) and said inner layer (3, 23, 33, 43, 110) are formed from circumferential oriented prepreg sheets, said intermediate layer (5, 25, 26, 35, 36, 45, 46, 120) is formed from axially oriented prepreg sheets, wherein said axially oriented prepreg sheets have an overlapping margin of its end portions of up to 3.0 mm.

9. A tubular body according to at least one of the preceding claims 1 to 7, **characterized in that** an outer layer (7, 27, 37, 47, 130) and said inner layer (3, 23, 33, 43, 110) are formed from circumferential oriented prepreg sheets, said intermediate layer (5, 25, 26, 35, 36, 45, 46, 120) is formed from axially oriented prepreg sheets, wherein said axially oriented prepreg sheets have an overlapping margin of its end portions in a range of 6 % or lower of the circumference.

10. A tubular body according to at least one of the preceding claims 1 to 7, **characterized in that** an outer layer (7, 27, 37, 47, 130) and said inner layer (3, 23, 33, 43, 110) are formed from circumferential oriented prepreg sheets, said intermediate layer (5, 25, 26, 35, 36, 45, 46, 120) is formed from axially oriented prepreg sheets, wherein said end portions of said axially oriented prepreg sheets comprising thin wall portions are overlapping each other and said circumferential oriented prepreg sheets and said axially oriented prepreg sheets are integrally wound.

11. A tubular body according to at least one of the preceding claims 8 to 10, **characterized in that** said end portion of said axially oriented prepreg sheets is interposed between said both end portions of said circumferential oriented prepreg sheets.

12. A tubular body according to at least one of the preceding claims 8 to 11, **characterized in that** said axially oriented prepreg sheets have a resin impregnation amount of 23 wt% or less.

13. A tubular body according to at least one of the preceding claims 8 to 12, **characterized in that** said resin impregnation amount of said whole prepreg constituting said tubular body is set in a range of 10 wt% to 25 wt%.

## Patentansprüche

1. Rohrförmiger Körper mit gewickelten Schichten, die mit Prepeg- Lagen, vorbereitet durch Imprägnieren von verstärkter Fasern mit Kunstharzen, **dadurch gekennzeichnet, daß** ein dünnwandiger, geneigter Abschnitt (12a, 13a, 45a', 45b') in beiden Endabschnitten einer Prepeg- Lage (45) gebildet ist, gewickelt einlagig zum Bilden einer der gewickelten Schichten, wobei die geneigten Abschnitte (12a, 13a, 45a', 45b') einander überlappen.

2. Rohrförmiger Körper nach Anspruch 1, **dadurch gekennzeichnet, daß** die Prepeg-Lage (45), einschichtig gewickelt, einen Abschnitt bildet zum Aufnehmen einer überschüssigen Menge von Kunstharzen und Fasern an einem überlappenden Abschnitt (3a, 7a, 12,13, 25a, 50) des geneigten Abschnittes (12a, 13a, 45a', 45b') der Prepeg- Lagen.

3. Rohrförmiger Körper nach Anspruch 2, **dadurch gekennzeichnet, daß** der Abschnitt zum Aufnehmen einer überschüssigen Menge von Kunstharzen und Fasern ein dünner Wandabschnitt (50) ist.

4. Rohrförmiger Körper nach zumindest einem der vorhergehenden Ansprüche 1 bis 3, **dadurch gekennzeichnet, daß** die Prepeg- Lage (45), versehen mit den geneigten Abschnitten (12a, 13a, 45a', 45b') auf eine innerste Schicht (43) gewickelt ist, und darauf abfolgend eine Prepeg- Lage (46) als eine zweite Zwischenschicht, ebenso wie eine Prepeg- Lage (47) als eine äußerste Schicht gewickelt sind.

5. Rohrförmiger Körper mit gewickelten Schichten, die mit Prepeg- Lagen vorbereitet durch Imprägnieren von verstärkten Fasern mit Kunstharzen, **dadurch gekennzeichnet, daß** die eine Prepeg- Lage als eine einschichtig gewickelte Zwischenschicht (5, 25, 26, 35, 36, 45, 46, 120) zum Bilden einer der gewickelten Schichten an ihrem einen Endabschnitt überlappt ist durch eine weitere benachbarte Prepeg- Lage als einer Innenschicht (3, 23, 33, 43, 110), einschichtig zum Bilden einer weiteren gewickelten Schicht gewickelt, wobei die Innenschicht (3, 23, 33, 43, 110) einen überlappenden Abschnitt (3a, 7a, 12, 13, 25a, 50) beider Endabschnitte derselben aufweist und der überlappende Abschnitt (3a, 7a, 12, 13, 25a, 50) in einem gespreizten Abschnitt (6a, 6b, 26a, 36a) gebildet, durch beide Endabschnitte der Zwischenschicht (5, 25, 26, 35, 36, 45, 46, 120) angeordnet ist.

6. Rohrförmiger Körper nach Anspruch 5, **dadurch gekennzeichnet, daß** eine Breite des gespreizten Abschnittes in einem Bereich von 0,1 mm - 1,0 mm ist.

7. Rohrförmiger Körper nach Anspruch 5 oder 6, **dadurch gekennzeichnet, daß** der überlappende Abschnitt (3a, 7a, 12, 13, 25a, 50) and der gespreizte Abschnitt (6a, 6b, 26a, 36a) mit überschüssiger Menge von Kunstharzen und Fasern von benachbarten Prepeg- Lagen bei wärmeaushärtender Behandlung ausgefüllt sind.

8. Rohrförmiger Körper nach zumindest einem der vorhergehenden Ansprüche 1 bis 7, **dadurch gekennzeichnet, daß** eine Außenschicht (7, 27, 37, 47,130) und die Innenschicht (3, 23, 33, 43, 110) aus in Umfangsrichtung ausgerichteten Prepeg- Lagen gebildet sind, die Zwischenschicht (5, 25, 26, 35, 36, 45, 46, 120) ist von axial ausgerichteten Prepeg- Lagen gebildet ist, wobei die axial ausgerichteten Prepeg- Lagen einen überlappenden Rand ihrer Endabschnitte von bis zu 3,0 mm haben.

9. Rohrförmiger Körper nach zumindest einem der vorhergehenden Ansprüche 1 bis 7, **dadurch gekennzeichnet, daß** eine Außenschicht (7, 27, 37, 47,130) and die Innenschicht (3, 23, 33, 43, 110) aus in Umfangsrichtung ausgerichteten Prepeg- Lagen gebildet sind, die Zwischenschicht (5, 25, 26, 35, 36, 45, 46, 120) von axial ausgerichteten Prepeg- Lagen gebildet ist, wobei die axial ausgerichteten Prepeg- Lagen einen überlappenden Rand ihrer Endabschnitte in einem Bereich von 6% oder weniger des Umfangs haben.

10. Rohrförmiger Körper nach zumindest einem der vorhergehenden Ansprüche 1 bis 7, **dadurch gekennzeichnet, daß** eine Außenschicht (7, 27, 37, 47,130) und die Innenschicht (3, 23, 33, 43, 110) von in Umfangsrichtung ausgerichteten Prepeg- Lagen gebildet sind, die Zwischenschicht (5, 25, 26, 35, 36, 45, 46, 120) aus axial ausgerichteten Prepeg- Lagen gebildet ist, wobei die Endabschnitte der axial ausgerichteten Prepeg- Lagen dünne, einander überlappende Wandabschnitte sind und die axial ausgerichteten Prepeg- Lagen einstückig gewickelt sind.

11. Rohrförmiger Körper nach zumindest einem der vorhergehenden Ansprüche 8 bis 10. **dadurch gekennzeichnet, daß** der Endabschnitt der axial ausgerichteten Prepeg- Lagen zwischen die beiden Endabschnitte der in Umfangsrichtung ausgerichteten Prepeg- Lagen eingesetzt ist.

12. Rohrförmiger Körper nach zumindest einem der vorhergehenden Ansprüche 8 bis 11, **dadurch gekennzeichnet, daß** die axial orientierten Prepeg- Lagen eine Kunstharzimprägnierungsmenge von 23 Gew.-% oder weniger haben.

13. Rohrförmiger Körper nach zumindest einem der vorhergehenden Ansprüche 8 bis 12, **dadurch gekennzeichnet, daß** die Kunstharzimprägnierungsmenge des gesamten Prepeg, das den rohrförmigen Körper bildet, in einen Bereich von 10 Gew.-% bis 25 Gew.-% festgelegt ist.

## Revendications

1. Corps tubulaire comprenant des couches enroulées qui sont formées avec des feuilles préimprégnées préparées par imprégnation de fibres renforcées avec des résines synthétiques, **caractérisé en ce qu'**une mince partie inclinée de paroi (12a, 13a, 45a', 45b') est formée sur les deux parties d'extrémité d'une feuille préimprégnée (45) enroulée sur un pli, afin de constituer l'une desdites couches enroulées, dans lesquelles lesdites parties inclinées (12a, 13a, 45a', 45b') se recouvrent l'une l'autre.

2. Corps tubulaire selon la revendication 1, **caractérisé en ce que** ladite feuille préimprégnée (45) enroulée sur un pli forme une partie destinée à assimiler une quantité de résines et de fibres en excès sur une partie de recouvrement (3a, 7a, 12, 13, 25a, 50) de ladite partie inclinée (12a, 13a, 45a', 45b') de ladite feuille préimprégnée.

3. Corps tubulaire selon la revendication 2, **caractérisé en ce que** ladite partie destinée à assimiler une quantité de résines et de fibres en excès est une mince partie de paroi (50).

4. Corps tubulaire selon au moins l'une des revendications précédentes 1 à 3, **caractérisé en ce que** ladite feuille préimprégnée (45) formée avec lesdites parties inclinées (12a, 13a, 45a', 45b') est enroulée sur une couche la plus à l'intérieur (43), et qu'une feuille préimprégnée (46) en tant que seconde couche intermédiaire, de même qu'une feuille préimprégnée (47) en tant que couche la plus à l'extérieur sont enroulée sur celle-ci dans cet ordre.

5. Corps tubulaire comprenant des couches enroulées qui sont formées avec des feuilles préimprégnées préparées par imprégnation de fibres renforcées avec des résines synthétiques, **caractérisé en ce que** ladite une feuille préimprégnée en tant que couche intermédiaire (5, 25, 26, 35, 36, 45, 46, 120) enroulée sur un pli, afin de constituer l'une desdites couches enroulées est recouverte à l'une de ses parties d'extrémité par une autre feuille préimprégnée adjacente en tant que couche interne (3, 23, 33, 43, 110) en roulée sur un pli afin de constituer une autre couche enroulée, dans lequel ladite couche interne (3, 23, 33, 43, 110) comprend une partie de recouvrement (3a, 7a, 12, 13, 25a, 50) des deux parties d'extrémité de celle-ci et ladite partie de recouvrement (3a, 7a, 12, 13, 25a, 50) est positionnée dans une partie d'expansion (6a, 6b, 26a, 36a) définie par les deux parties d'extrémité de ladite couche intermédiaire (5, 25, 26, 35, 36, 46, 120).

6. Corps tubulaire selon la revendication 5, **caractérisé en ce qu'**une largeur de ladite partie d'expansion (6a, 6b, 26a, 36a) est formée dans une plage de 0,1 mm à 1,0 mm.

7. Corps tubulaire selon la revendication 5 ou la revendication 6, **caractérisé en ce que** ladite partie de recouvrement (3a, 7a, 12, 13, 25a, 50) et ladite partie d'expansion (6a, 6b, 26a, 36a) sont remplies de la quantité de résines et de fibres en excès en provenance des feuilles préimprégnées adjacentes au moment du traitement de thermodurcissage.

8. Corps tubulaire selon au moins l'une des revendications précédentes 1 à 7, **caractérisé en ce qu'**une couche externe (7, 27, 37, 47, 130) et ladite couche interne (3, 23, 33, 43, 110) sont formées à partir de feuilles préimprégnées orientées en circonférence, ladite couche intermédiaire (5, 25, 26, 35, 36, 45, 46, 120) est formée à partir de feuilles préimprégnées orientées axialement, dans lequel lesdites feuilles préimprégnées orientées axialement ont une marge de recouvrement de leurs parties d'extrémité allant jusqu'à 3,0 mm.

9. Corps tubulaire selon au moins l'une des revendications précédentes 1 à 7, **caractérisé en ce qu'**une couche externe (7, 27, 37, 47, 130) et ladite couche interne (3, 23, 33, 43, 110) sont formées à partir de feuilles préimprégnées orientées en circonférence, ladite couche intermédiaire (5, 25, 26, 35, 36, 45, 46, 120) est formée à partir de feuilles préimprégnées orientées axialement, dans lequel lesdites feuilles préimprégnées orientées axialement ont une marge de recouvrement de leurs parties d'extrémité située dans une plage égale ou inférieure à 6% de la circonférence.

10. Corps tubulaire selon au moins l'une des revendications précédentes 1 à 7, **caractérisé en ce qu'**une couche externe (7, 27, 37, 47, 130) et ladite couche interne (3, 23, 33, 43, 110) sont formées à partir de feuilles préimprégnées orientées en circonférence, ladite couche intermédiaire (5, 25, 26, 35, 36, 45, 46, 120) est formée à partir de feuilles préimprégnées orientées axialement, dans lequel lesdites parties d'extrémité desdites feuilles préimprégnées orientées axialement comprenant de minces parties de paroi se recouvrent les unes les autres et lesdites feuilles préimprégnées orientées en circonférence et lesdites feuilles préimprégnées orientées axialement sont enroulées de manière intégrée.

11. Corps tubulaire selon au moins l'une des revendications précédentes 8 à 10, **caractérisé en ce que** ladite partie d'extrémité desdites feuilles préimprégnées orientées axialement est disposée entre lesdites deux partie d'extrémité desdites feuilles préimprégnées orientées en circonférence

12. Corps tubulaire selon au moins l'une des revendications précédentes 8 à 11, **caractérisé en ce que** lesdites feuilles préimprégnées orientées axialement ont une valeur d'imprégnation de résine inférieure ou égale à 23% par poids.

13. Corps tubulaire selon au moins l'une des revendications précédentes 8 à 12, **caractérisé en ce que** ladite valeur d'imprégnation de résine de ladite totalité des feuilles préimprégnées constituant ledit corps tubulaire se situe dans une plage de 10% par poids à 25% par poids.
